(19) **Europäisches Patentamt European Patent Office Office européen des brevets**

(11) **EP 3 907 677 B1**

(12) **EUROPEAN PATENT SPECIFICATION**

(45) Date of publication and mention
of the grant of the patent:
**18.03.2026 Bulletin 2026/12**

(21) Application number: **20749267.9**

(22) Date of filing: **19.01.2020**

(51) International Patent Classification (IPC):
**G06Q 10/06** $^{(2023.01)}$

(52) Cooperative Patent Classification (CPC):
**G06Q 10/06393; G06Q 50/40**

(86) International application number:
**PCT/CN2020/072934**

(87) International publication number:
**WO 2020/156266 (06.08.2020 Gazette 2020/32)**

(54) **METHOD AND APPARATUS FOR EVALUATING DRIVING SITUATION OF DRIVER, AND MACHINE-READABLE STORAGE MEDIUM**

VERFAHREN UND VORRICHTUNG ZUR BEWERTUNG DER FAHRSITUATION EINES FAHRERS UND MASCHINENLESBARES SPEICHERMEDIUM

PROCÉDÉ ET APPAREIL D'ÉVALUATION DE LA SITUATION DE CONDUITE D'UN CONDUCTEUR, ET SUPPORT DE STOCKAGE LISIBLE PAR MACHINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.01.2019 CN 201910087067**

(43) Date of publication of application:
**10.11.2021 Bulletin 2021/45**

(73) Proprietor: **Great Wall Motor Company Limited**
**Baoding, Hebei 071000 (CN)**

(72) Inventors:
 • **ZHANG, Shuai**
 **Baoding, Hebei 071000 (CN)**
 • **WENG, Haoyu**
 **Baoding, Hebei 071000 (CN)**
 • **LIU, Xiu**
 **Baoding, Hebei 071000 (CN)**
 • **LI, Yan**
 **Baoding, Hebei 071000 (CN)**
 • **ZHANG, Junwei**
 **Baoding, Hebei 071000 (CN)**
 • **DIAO, Wei**
 **Baoding, Hebei 071000 (CN)**

(74) Representative: **dompatent**
**Partnerschaft von**
**Patentanwälten und Rechtsanwälten mbB**
**Deichmannhaus am Dom**
**Bahnhofsvorplatz 1**
**50667 Köln (DE)**

(56) References cited:
**EP-A1- 2 343 208          CN-A- 105 644 563**
**CN-A- 106 529 599          CN-A- 107 239 038**
**CN-A- 108 001 453          CN-A- 108 407 816**
**US-A1- 2011 118 921**

## Description

### FIELD

The present disclosure relates to the field of vehicle technology, and in particular to a method and a device for evaluating a driving situation of a driver, and a machine readable storage medium.

### BACKGROUND

Human beings are facing problems of energy shortage and environmental pollution, and many countries strongly demand the development of new energy. In China, the development of new energy automobile industry is vigorously supported, and pure electric vehicles are the focus of the development of the automobile industry. Compared with the conventional fuel vehicles, the electric vehicles have the following ideal dynamic features: fast vehicle start, continuous acceleration, good linearity and good dynamic performance. People, in enjoying the excellent acceleration performance of the electric vehicles, ignore that power and economy cannot be achieved simultaneously. Intense driving worsens the economy of the vehicle, which greatly reduces the driving range of the vehicle and is the pain point of the owner of the vehicle and the entire industry. Therefore, it is required to provide a function of driving evaluation to guide drivers to drive economically and cultivate good driving habits.

Document EP 2 343 208 A1, e.g., discloses a device for instructing a driver to perform a drive operation for enhancing fuel efficiency.

### SUMMARY

In view of this, a method for evaluating a driving situation of a driver is provided according to the present disclosure to evaluate the driving situation of the driver.

In order to achieve the above objective, the following technical solutions are provided according to the present disclosure.

A method for evaluating a driving situation of a driver is provided. The method includes: acquiring information of one or more evaluation factors; for each of the evaluation factors, determining an instantaneous score corresponding to the evaluation factor based on an instantaneous scoring rule corresponding to the evaluation factor and information of the evaluation factor, and determining a single-score corresponding to the evaluation factor based on the determined instantaneous score corresponding to the evaluation factor, where the single-score corresponding to the evaluation factor indicates an evaluation of the driving situation of the driver.

The method further includes: determining a total score corresponding to the evaluation factors based on the single-score corresponding to each of the evaluation factors and a predetermined weight corresponding to each of the evaluation factors. The evaluation of the driving situation of the driver further includes the total score.

The method further includes: informing the driver of the single-score corresponding to each of the evaluation factors.

Further, the evaluation factors include at least one of an acceleration situation of a vehicle, a deceleration situation of the vehicle in a case of energy recovery, a deceleration situation of the vehicle in a case of no energy recovery, a speed situation of the vehicle and a high-voltage accessory consumption situation of the vehicle.

Further, in a case that the evaluation factors include the acceleration situation of the vehicle, information of the acceleration situation includes: whether an accelerator pedal is depressed, whether a logical gear is set at a driving gear position, an acceleration of the vehicle and a speed of the vehicle; the determining, for each of the evaluation factors, an instantaneous score corresponding to the evaluation factor based on an instantaneous scoring rule corresponding to the evaluation factor and information of the evaluation factor includes: in a case that the accelerator pedal is depressed, the logical gear is set at a driving gear position, and the speed of the vehicle is greater than a first predetermined speed, determining an instantaneous score corresponding to the acceleration situation based on the acceleration of the vehicle, the speed of the vehicle, and an instantaneous scoring rule corresponding to the acceleration and the speed; and in a case that the accelerator pedal is not depressed, or the logical gear is not set at a driving gear position, or the speed of the vehicle is not greater than a first predetermined speed, determining an instantaneous score corresponding to the acceleration situation to be zero; and/or in a case that the evaluation factors include the deceleration situation of the vehicle in the case of energy recovery, information of the deceleration situation of the vehicle in the case of energy recovery includes: whether a logical gear is set at an energy recovery gear position, an acceleration of the vehicle, and a speed of the vehicle; the determining, for each of the evaluation factors, an instantaneous score corresponding to the evaluation factor based on an instantaneous scoring rule and corresponding to the evaluation factor and information of the evaluation factor includes: in a case that the logical gear is set at the energy recovery gear position and the speed of the vehicle is greater than a second predetermined speed, determining an instantaneous score corresponding to the deceleration situation of the vehicle in the case of energy recovery based on the acceleration and an instantaneous scoring rule corresponding to the acceleration; and in a case that the logical gear is not set at an energy recovery gear position or the speed of the vehicle is not greater than a second predetermined speed, determining an instantaneous score corresponding to the deceleration situation of the vehicle in the case of energy recovery to be zero; and/or in a case that the evaluation factors include the deceleration situation of the vehicle in the case of no energy recovery, information of the deceleration situation of the vehicle in the case of no energy recovery includes: whether a brake pedal is depressed, whether a logic gear is set at a no energy recovery gear position, a speed of the vehicle, and an acceleration of the vehicle; the determining, for each of the evaluation factors, an instantaneous score corresponding to the evaluation factor based on an instantaneous scoring rule corresponding to the evaluation factor and information of the evaluation factor includes: in a case that the brake pedal is depressed, the logic gear is set at the no energy recovery gear position, and the speed of the vehicle is greater than a third predetermined speed, determining an instantaneous score corresponding to the deceleration situation of the vehicle in the case of no energy recovery based on the acceleration of the vehicle and an instantaneous scoring rule corresponding to the acceleration; and in a case that the brake pedal is not depressed, or the logic gear is not set at a no energy recovery gear position, or the speed of the vehicle is not greater than a third predetermined speed, determining an instantaneous score corresponding to the deceleration situation of the vehicle in the case of no energy recovery to be zero; and/or in a case that the evaluation factors includes the speed situation of the vehicle, information of the speed situation of the vehicle includes a speed of the vehicle; the determining, for each of the evaluation factors, an instantaneous score corresponding to the evaluation factor based on an instantaneous scoring rule corresponding to the evaluation factor and information of the evaluation factor includes: in a case that the speed of the vehicle is greater than a fourth predetermined speed, determining an instantaneous score corresponding to the speed situation based on the speed of the vehicle and an instantaneous scoring rule corresponding to the speed of the vehicle; and in a case that the speed of the vehicle is less than or equal to a fourth speed, determining an instantaneous score corresponding to the acceleration situation to be zero; and/or in a case that the evaluation factors include the high-voltage accessory consumption situation, the determining, for each of the evaluation factors, an instantaneous score corresponding to the evaluation factor based on an instantaneous scoring rule corresponding to the evaluation factor and information of the evaluation factor includes: determining an instantaneous score corresponding to the high-voltage accessory consumption situation based on a power of an air conditioner and an instantaneous scoring rule corresponding to the power of the air conditioner.

Further, the determining, for each of the evaluation factors, a single-score corresponding to the evaluation factor based on the determined instantaneous score corresponding to the evaluation factor is performed by using the following equation::

$$S_{ai}(n+1) = S_{ai}(n) + \frac{\int S'_{ai}\mathrm{dt}}{t}$$

where S'$_{ai}$ represents an instantaneous score corresponding to an evaluation factor i at an time instant, t represents a duration of a scoring period, n represents a sequence number of the scoring period, S$_{ai}$(n+1) represents a single-score corresponding to the evaluation factor i in an (n+1)th scoring period, and S$_{ai}$(n) represents a single-score corresponding to the evaluation factor i in an (n)th scoring period.

Compared with the conventional technology, the method for evaluating a driving situation of a driver according to the present disclosure has the following advantages. For each of one or more evaluation factors, a single-score corresponding to the evaluation factor can be determined, and the single-score corresponding to the evaluation factor indicates an evaluation of the driving situation of the driver, thereby evaluating the driving situation of the driver.

According to the present disclosure, a device for evaluating a driving situation of a driver is further provided to evaluate the driving situation of the driver.

In order to achieve the objective, the following technical solutions are provided according to the present disclosure.

A device for evaluating a driving situation of a driver is provided. The device includes an acquiring module and a processing module. The acquiring module is configured to acquire information of one or more evaluation factors. The processing module is configured to, for each of the evaluation factors, determine an instantaneous score corresponding to the evaluation factor based on an instantaneous scoring rule corresponding to the evaluation factor and information of the evaluation factor, and determine a single-score corresponding to the evaluation factor based on the determined instantaneous score corresponding to the evaluation factor, where the single-score corresponding to the evaluation factor indicates an evaluation of the driving situation of the driver.

The processing module is further configured to determine a total score corresponding to the evaluation factors based on the single-score corresponding to each of the evaluation factors and a predetermined weight corresponding to each of the evaluation factors, where the evaluation of the driving situation of the driver further includes the total score.

The device further includes an informing module. The informing module is configured to inform the driver of the single-score corresponding to each of the evaluation factors.

Compared with the conventional technology, the device for evaluating a driving situation of a driver has the same advantages as the method for evaluating a driving situation of a driver, which are not repeated herein.

According to the present disclosure, a machine readable storage medium is further provided. The machine readable storage medium stores instructions. The instructions, when executed by a machine, cause the machine to perform the method.

According to the present disclosure, a processor is further provided. The processor is configured to perform the method when executing a program.

Other features and advantages of the present disclosure are to be described in detail in the following embodiments.

## BRIEF DESCRIPTION OF THE DRAWINGS

The drawings that form part of the present disclosure are used for further understanding the present disclosure. The schematic embodiments of the present disclosure and the descriptions of the embodiments are used for explaining the present disclosure, and do not intend to limit the present disclosure. In the drawings:

Figure 1 is a flowchart of a method for evaluating a driving situation of a driver according to an embodiment of the present disclosure; and

Figure 2 is a schematic structural diagram of a device for evaluating a driving situation of a driver according to an embodiment of the present disclosure.

Reference numerals are listed as follows:

| 1 | acquiring module | 2 | processing module |

## DETAILED DESCRIPTION OF EMBODIMENTS

It should be noted that the embodiments of the present disclosure and the features in the embodiments may be in combination with each other if there is no conflict.

Hereinafter, the present disclosure is described in detail with reference to the drawings and in conjunction with the embodiments.

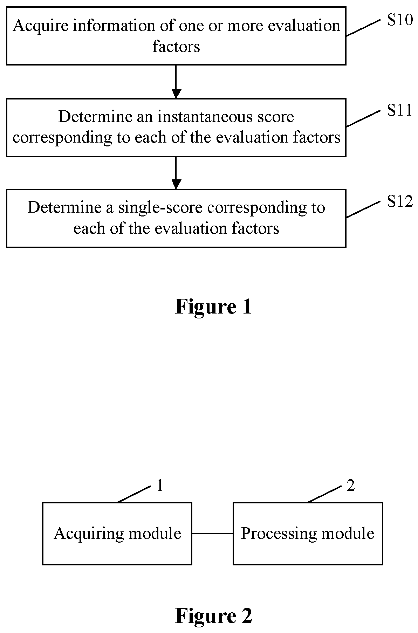

A method for evaluating a driving situation of a driver is provided according to an embodiment of the present disclosure. Figure 1 is a flowchart of a method for evaluating a driving situation of a driver according to an embodiment of the present disclosure. As shown in Figure 1, the method includes the following steps S10 to S12.

In step S10, information of one or more evaluation factors is acquired. The one or more evaluation factors are used for evaluating the driving situation of the driver. For example, the evaluation factors include at least one of an acceleration situation of the vehicle, a deceleration situation of the vehicle in a case of energy recovery, a deceleration situation of the vehicle in a case of no energy recovery, a speed situation of the vehicle and a high-voltage accessory consumption situation of the vehicle. Information of the acceleration situation may include: whether an accelerator pedal is depressed, whether a logical gear is set at a driving gear position, an acceleration of the vehicle, a speed of the vehicle, and the like. Information of the deceleration situation of the vehicle in the case of energy recovery may include: whether the logical gear is set at an energy recovery gear position, the acceleration of the vehicle, the speed of the vehicle, and the like. Information of the deceleration situation of the vehicle in the case of no energy recovery may include: whether a brake pedal is depressed, whether the logic gear is set at a no energy recovery gear position, the speed of the vehicle, the acceleration of the vehicle, and the like. Information of the speed situation of the vehicle may include the speed of the vehicle.

In step S11, for each of the evaluation factors, an instantaneous score corresponding to the evaluation factor is determined based on an instantaneous scoring rule corresponding to the evaluation factor and information of the evaluation factor. That is, for each of the one or more evaluation factors, the instantaneous score corresponding to the evaluation factor is determined based on the instantaneous scoring rule corresponding to the evaluation factor and the information of the evaluation factor.

In step S12, for each of the evaluation factors, a single-score corresponding to the evaluation factor is determined based on the determined instantaneous score corresponding to the evaluation factor, where the single-score corresponding to the evaluation factor indicates an evaluation of the driving situation of the driver. That is, for each of the evaluation factors, the single-score corresponding to the evaluation factor indicates an evaluation of a driving situation corresponding to the evaluation factor. For example, in a case that the evaluation factors include the acceleration situation of the vehicle, a score corresponding to the acceleration situation indicates an evaluation of the acceleration situation of the vehicle. For another example, in a case that the evaluation factors include the deceleration situation of the vehicle in a case of energy recovery, a score corresponding to the deceleration situation of the vehicle in the case of energy recovery indicates an evaluation of the deceleration situation of the vehicle in the case of energy recovery.

With the method for evaluating a driving situation of a driver according to the embodiments of the present disclosure, for each of the evaluation factors, the single-score corresponding to the evaluation factor can be determined, and the single-score corresponding to the evaluation factor indicates an evaluation of the driving situation of the driver, thereby evaluating the driving situation of the driver, scientifically guiding the driver to drive economically, and cultivating good driving habits. In addition, the method according to the present disclosure is scientific and reasonable, and can be calibrated. With the method according to the present disclosure, the calculated data result can be displayed in various ways, that is, the driver can be informed of the score in various ways, so that the driver knows the driving situation.

In an embodiment of the present disclosure, the driving situation of the driver may be evaluated based on a total score corresponding to the one or more factors. The total score corresponding to the evaluation factors is determined based on the single-score corresponding to each of the evaluation factors and a predetermined weight corresponding to each of the evaluation factors. For example, the total score corresponding to the evaluation factors is determined based on the following equation:

$$S_{total}=K_1*S_{a1}+K_2*S_{a2}+K_3*S_{a3}+\ldots+K_n*S_{an}$$

where $S_{ai}$ represents a single-score corresponding to an evaluation factor i, and $K_i$ represents a predetermined weight corresponding to the evaluation factor i. For each of the evaluation factors, the predetermined weight corresponding to the evaluation factor may be predetermined according to actual conditions. A greater predetermined weight indicates that an evaluation factor corresponding to the predetermined weight plays a more important role in evaluating the driving situation of the driver.

For example, driving habits of the driver may be evaluated based on factors, such as the driving stability, the driving speed, the rationality of use of an air conditioner accessory, which have great impact on the energy consumption of the vehicle. That is, the driving habits of the driver are evaluated based on the factors that affect the energy consumption of the vehicle. The evaluation factors include at least one of an acceleration situation of a vehicle, a deceleration situation of the vehicle in a case of energy recovery, a deceleration situation of the vehicle in a case of no energy recovery, a speed situation of the vehicle , and a high-voltage accessory consumption situation of the vehicle. In a case that an enabling condition is met, a function of driving scoring is activated and a total score S is calculated. Factors, such as an acceleration of the vehicle by depressing an accelerator pedal ($S_{a1}$), a deceleration of the vehicle in a case of energy recovery ($S_{a2}$), a deceleration of the vehicle in a case of no energy recovery ($S_{a3}$), a speed of the vehicle ($S_V$), and an air conditioner high-voltage accessory consumption ($S_{ac}$) are considered. A total score corresponding to the above evaluation factors is determined based on the following equation:

$$S_n=K_1*S_{a1(n)}+K_2*S_{a2(n)}+K_3*S_{a3(n)}+K_4*S_{V(n)}+K_5*S_{ac(n)}$$

where $S_n$ represents a total driving score, that is, the total score corresponding to the one or more evaluation factors; $S_{ai}(n)$ represents a score corresponding to the acceleration of the vehicle in a case of depressing the accelerator pedal, that is, a single-score corresponding to the acceleration situation of the vehicle; $K_1$ represents a weight of the score corresponding to the acceleration of the vehicle in a case of depressing the accelerator pedal to the total score, that is, a predetermined weight corresponding to the acceleration situation of the vehicle; $S_{a2(n)}$ represents a score corresponding to the deceleration of the vehicle in the case of energy recovery, that is, a single-score corresponding to the deceleration situation of the vehicle in the case of energy recovery; $K_2$ represents a weight of the score corresponding to the deceleration of the vehicle in the case of energy recovery to the total score, that is, a predetermined weight corresponding to the deceleration situation of the vehicle in the case of energy recovery; $S_{a3(n)}$ represents a score corresponding to the deceleration of the vehicle in the case of no energy recovery, that is, a single-score corresponding to the deceleration situation of the vehicle in the case of no energy recovery; $K_3$ represents a weight of the score corresponding to the deceleration of the vehicle in the case of no energy recovery to the total score, that is, a predetermined weight corresponding to the deceleration situation of the vehicle in the case of no energy recovery; $S_{V(n)}$ represents a score corresponding to the speed of the vehicle, that is, a single-score corresponding to the speed situation of the vehicle; $K_4$ represents a weight of the score corresponding to the speed of the vehicle to the total score, that is, a predetermined weight corresponding to the speed situation of the vehicle; $S_{ac(n)}$ represents a score corresponding to the air conditioner high-voltage accessory consumption, that is, a single-score corresponding to the high-voltage accessory situation of the vehicle; and $K_5$ represents a weight of the score corresponding to the air conditioner high-voltage accessory consumption to the total score, that is, a predetermined weight corresponding to the high-voltage accessory situation of the vehicle. In the example, score composition of the driving score is shown in Table 1.

Table 1

| Scoring item | Acceleration a | | | Speed V | Air conditioner AC |
|---|---|---|---|---|---|
| | a≥0 | a<0 | | | |
| | Driving gear position | In a case of energy recovery | In a case of no energy recovery | V>0 | |
| Maximum scores | 100 | 100 | 100 | 100 | 100 |
| Weights (TBD, total 100%) | $K_1$ | $K_2$ | $K_3$ | $K_4$ | $K_5$ |
| | $K_1+K_2+K_3$ | | | $K_4$ | $K_5$ |
| Maximum scores multiplied by weights | $100*K_1$ | $100*K_2$ | $100*K_3$ | $100*K_4$ | $100*K_5$ |
| Score statistics | $100*(K_1+K_2+K_3)$ | | | $100*K_4$ | $100*K_5$ |
| Total score | 100 | | | | |

The maximum scores are used for evaluating a reason for the pros and cons of a driving behavior, and include a score ($S_{a1}$) corresponding to an acceleration of the vehicle in a case of depressing an accelerator pedal, a score ($S_{a2}$) corresponding to a deceleration of the vehicle in a case of energy recovery, a score ($S_{a3}$) corresponding to a deceleration of the vehicle in a case of no energy recovery, a score ($S_v$) corresponding to a speed of the vehicle, and a score ($S_{ac}$) corresponding to an air conditioner high-voltage accessory consumption. The maximum scores are all equal to 100. In a case that a scoring item has a minimum score, it is determined that a driving behavior corresponding to the scoring item is the worst, then the driver is to be reminded to guide the driver to improve the driving behavior. The weights represent ratios of scores of scoring items to the total driving score S. A larger ratio indicates that a scoring item corresponding to the ratio has a greater influence on the total score, and $K_1+K_2+K_3+K_4+K_5=100\%$. Each of the maximum scores multiplied by weights represents a contribute value of a score calculated based on a ratio corresponding to the score to the total driving score S. For each scoring item, a full score of the scoring item is equal to 100 multiplied by a ratio corresponding to the scoring item. The score statistics represent contribution values of the acceleration, the speed of the vehicle, and the air conditioner to the total driving score S in a case that the total driving score S is full, and are calculated based on ratios corresponding to the acceleration, the speed of the vehicle, and the air conditioner. The total score represents the total driving score S.

Hereinafter, how to acquire a single-score corresponding to each of the evaluation factors is described in detail based on that the one or more evaluation factors include an acceleration situation of the vehicle, a deceleration situation of the vehicle in a case of energy recovery, a deceleration situation of the vehicle in a case of no energy recovery, a speed situation of the vehicle, and a high-voltage accessory consumption situation of the vehicle. It should be noted that the method is described below by taking the above evaluation factors as examples, and a single-score may be acquired with the method described below in a case that the evaluation factors include other evaluation factors.

(1) Score $S_{a1}$ module based on an acceleration of a vehicle in a case of depressing an accelerator pedal

The driving score determined based on the acceleration of the vehicle in the case of depressing an accelerator pedal is the single-score corresponding to the acceleration situation of the vehicle. Information of the acceleration situation includes whether an accelerator pedal is depressed, whether a logical gear is set at a driving gear position, an acceleration of the vehicle, and a speed of the vehicle. When the accelerator pedal is depressed, the acceleration of the vehicle represents an acceleration intensity of the vehicle. Under a stable driving situation, no point is to be deducted (that is, point is deducted by zero or point is increased). In a case that acceleration intensity is greater than the acceleration intensity in the smooth driving situation, points are to be deducted. For example, a reference acceleration time period under the stable driving situation meets the following requirements. An acceleration time period in which the speed is increased from 0km/h to 50km/h should be less than t1, an acceleration time period in which the speed is increased from 50km/h to 100km/h should be less than t2, and an acceleration time period in which the speed is increased from 100km/h to 150km/h should be less than t3. The score based on the acceleration of the vehicle in a case of depressing the accelerator pedal is calculated by performing the following operations.

In the case of depressing the accelerator pedal, an average deducted/added point determined based on the acceleration of the vehicle is calculated by using the following equation:

$$S'_{a1Average} = \frac{\int S'_{a1}\, dt}{t1}$$

A driving score determined based on the acceleration of the vehicle is calculated by using the following equation:

$$S_{a1}(n+1)=S_{a1}(n)+S'_{a1\,Average}=S_{a1}(n) + \frac{\int S'_{a1}\, dt}{t1} \quad (n=1,2,3,4\ldots\ldots).$$

In the above equations, $S_{a1}$ represents a driving score determined based on an acceleration situation in the case of depressing the accelerator pedal; n represents a sequence number of a scoring period; $S_{ai}(n+1)$ represents a driving score in an (n+1)th scoring period; $S_{a1}(n)$ represents a driving score in an (n)th scoring period; an initial value of $S_{a1}$ is greater than or equal to 0 and less than or equal to 100; t1 represents a duration of a scoring period in which the driving score is determined based on the acceleration situation in the case of depressing the accelerator pedal; $S'_{a1Average}$ represents an average deducted/added point determined based on an acceleration situation in the case of depressing the accelerator pedal in t1; and $S'_{ai}$ represents an instantaneous deducted/added point determined based on the acceleration situation in the case of depressing the accelerator pedal, that is, an instantaneous score corresponding to an acceleration situation at a time instant. In the embodiment of the present disclosure, the instantaneous deducted/added point may be determined based on an instantaneous scoring rule corresponding to the determining the driving score based on the acceleration in the case of depressing the accelerator pedal. Specifically, in a case that the accelerator pedal is depressed, the logical gear is set at a driving gear position, and the speed of the vehicle is greater than a first predetermined speed, the instantaneous deducted/added point $S'_{a1}$ is shown in Table 2, and the instantaneous score is determined based on the speed of the vehicle, the acceleration of the vehicle, and a corresponding relationship between the instantaneous score and the speed and the acceleration. The first predetermined speed may be determined based on actual situations, such as a situation of the vehicle and a driving situation of the vehicle. **In** a case that the accelerator pedal is not depressed, or the logical gear is not set at the driving gear position, or the speed of the vehicle is not greater than the first predetermined speed,, the instantaneous deducted/added point $S'_{a1}$ is equal to zero. **In** Table 2, "*" represents a point adding region and "**" represents a point reducing region. It should be noted that Table 2 only exemplarily shows the corresponding relationship between the instantaneous score and the speed and the acceleration of the vehicle. The detail value of the instantaneous score corresponding to the speed and the acceleration may be determined based on the vehicle and the actual situation. However, operations of adopting a predetermined corresponding relationship between the instantaneous score and the speed and the acceleration of the vehicle and determining the instantaneous score based on the predetermined corresponding relationship after obtaining a speed and an acceleration of the vehicle should fall within the protection scope of the present disclosure.

Table 2 Instantaneous deducted/added score $S'_{a1}$ corresponding to speed and acceleration of a vehicle with a logical gear set at driving gear position in a case of depressing accelerator pedal

| Speed / Acceleration | | | | |
|---|---|---|---|---|
| | * | * | * | 0.00 |
| | * | * | 0.00 | 0.0 |
| | 0.00 | 0.00 | 0.0 | 0.0 |

| | 0.00 | 0.0 | 0.0 | 0.0 |
|---|---|---|---|---|
| | 0.00 | 0.0 | 0.0 | ** |
| | 0.0 | 0.0 | ** | ** |
| | 0.0 | ** | ** | ** |
| | ** | ** | ** | ** |

(2) Score $S_{a2}$ module performing determination based on an deceleration of the vehicle in a case of energy recovery

The driving score determined based on the deceleration of the vehicle in the case of energy recovery is the single-score corresponding to the deceleration situation of the vehicle in the case of energy recovery according to the embodiments of the present disclosure. Information of the deceleration situation of the vehicle in the case of energy recovery includes: whether the logical gear is set at an energy recovery gear position, the acceleration of the vehicle, and the speed of the vehicle. The maximum feedback (energy recovery) deceleration of the vehicle is designed to be different at different speeds. According to a scoring rule based on energy efficiency, in a case that a deceleration is equal to the deceleration of the vehicle having a maximum energy recovery, it is determined that the energy recovery rate is the maximum and the deducted/added point is equal to a critical initial value. The deceleration of the vehicle having the maximum energy recovery may be determined according to actual situations, such as a situation of the vehicle and a driving situation of the vehicle. The driving score corresponding to the deceleration situation of the vehicle in the case of energy recovery is calculated by performing the following operations.

In a case that the logical gear of the vehicle is set at the energy recovery gear position and the vehicle is decelerated, an average deducted/added point determined based on the deceleration of the vehicle is calculated by using the following equation:

$$S'_{a2Average} = \frac{\int S'_{a2} \, \mathrm{dt}}{t2}$$

A driving score determined based on the deceleration of the vehicle is calculated by using the following equation:

$$S_{a2}(n+1) = S_{a2}(n) + S'_{a2Average} = S_{a2}(n) + \frac{\int S'_{a2} \, \mathrm{dt}}{t2} \quad (n=1,2,3,4\ldots\ldots).$$

In the above equations, $S_{a2}$ represents the driving score determined based on an deceleration situation in the case of energy recovery; n represents a sequence number of a scoring period; $S_{a2}(n+1)$ represents a driving score in an (n+1)th scoring period; $S_{a2}(n)$ represents a driving score in an (n)th scoring period; an initial value of $S_{a2}$ is greater than or equal to 0 and less than or equal to 10; t2 represents a duration of a scoring period in which the driving score is determined based on the deceleration of the vehicle in the case of energy recovery; $S'_{a2Average}$ represents an average deducted/added point determined based on an deceleration of the vehicle in the case of energy recovery in t2; and $S'_{a2}$ represents an instantaneous deducted/added point determined based on the deceleration of the vehicle in the case of energy recovery, that is, an instantaneous score corresponding to an deceleration situation at a time instant. In the embodiment of the present disclosure, the instantaneous deducted/added point may be determined based on an instantaneous scoring rule corresponding to the determining the driving score based on the deceleration of the vehicle in the case of energy recovery. Specifically, in a case that the logic gear is set at an energy recovery gear position and the speed of the vehicle is greater than a second predetermined speed, the instantaneous deducted/added point $S'_{a2}$ is shown in Table 3, and the instantaneous score is determined based on the acceleration of the vehicle and a corresponding relationship between the instantaneous score and the acceleration. The second predetermined speed may be determined based on actual situations, such as a situation of the vehicle and a driving situation of the vehicle. In a case that the logic gear is not set at the energy recovery gear position or the speed of the vehicle is not greater than the second predetermined speed, the instantaneous deducted/added point $S'_{a2}$ is equal to zero. **In** Table 3, "*" represents a point adding region and "**" represents a point deducting region. It should be noted that Table 3 only exemplarily shows the corresponding relationship between the acceleration and the instantaneous score. The detail value of the instantaneous score corresponding to the acceleration may be determined based on the vehicle and the actual situation. However, operations of adopting a predetermined corresponding relationship between the acceleration and the instantaneous score and determining the instantaneous score based on the predetermined corresponding relationship after obtaining an acceleration should fall within the protection scope of the present disclosure.

Table 3 Instantaneous deducted/added point $S'_{a2}$ corresponding to acceleration of a vehicle decelerated in a case of energy recovery

| Acceleration of vehicle (m/s$^2$) | | | | |
|---|---|---|---|---|
| Instantaneous score | * | 0 | ** | * * |

(3) Score $S_{a3}$ module performing determination based on an deceleration of the vehicle in a case of no energy recovery and depressing a brake pedal

The driving score determined based on the deceleration of the vehicle in a case of depressing a brake pedal and no energy recovery is the single-score corresponding to the deceleration situation of the vehicle in the case of no energy recovery. Information of the deceleration situation of the vehicle in the case of no energy recovery includes: whether the brake pedal is depressed, whether the logic gear is set at a no energy recovery gear position, the speed of the vehicle, and the acceleration of the vehicle. In the case of no energy recovery, no energy is recovered by depressing the brake pedal. Therefore, in a case that the vehicle with the acceleration is stopped smoothly, no points are to be deducted; and in a case that the vehicle with the acceleration is not stopped smoothly, points are to be deducted. The driving score is determined based on the deceleration of the vehicle in a case of depressing the brake pedal and no energy recovery by performing the following operations.

In the case of no energy recovery and depressing the brake pedal, an average deducted/added point determined based on the deceleration of the vehicle is calculated by using the following equation:

$$S'_{a3Average} = \frac{\int S'_{a3}\, dt}{t3}$$

A driving score determined based on the deceleration of the vehicle is calculated by using the following equation:

$$S_{a3}(n+1) = S_{a3}(n) + S'_{a3Average} = S_{a3}(n) + \frac{\int S'_{a3}\, dt}{t3} \quad (n=1,2,3,4\ldots\ldots).$$

In the above equations, $S_{a3}$ represents a driving score determined based on a deceleration situation in the case of no energy recovery and depressing the brake pedal; n represents a sequence number of a scoring period; $S_{a3}(n+1)$ represents a driving score in an (n+1)th scoring period; $S_{a3}(n)$ represents a driving score in an (n)th scoring period; an initial value of $S_{a3}$ is greater than or equal to 0 and less than or equal to 10; t3 represents a duration of a scoring period in which the driving score is determined based on the deceleration of the vehicle in the case of no energy recovery and depressing the brake pedal; $S'_{a3Average}$ represents an average deducted/added point determined based on a deceleration of the vehicle in the case of no energy recovery and depressing the brake pedal in t3; and $S'_{a3}$ represents an instantaneous deducted/added point determined based on the deceleration situation of the vehicle in the case of no energy recovery and depressing the brake pedal, that is, an instantaneous score corresponding to a deceleration situation at a time instant. In the embodiment of the present disclosure, the instantaneous score may be determined based on an instantaneous scoring rule corresponding to the determining the instantaneous score based on the deceleration situation of the vehicle in the case of no energy recovery and depressing the brake pedal. **In** a case that the brake pedal is depressed, the logic gear is set at a no energy recovery gear position, and the speed of the vehicle is greater than a third predetermined speed, the instantaneous deducted/added point $S'_{a3}$ is shown in Table 4, and the instantaneous score is determined based on the acceleration of the vehicle and a corresponding relationship between the acceleration and the instantaneous score. The third predetermined speed may be determined based on actual situations, such as a situation of the vehicle and a driving situation of the vehicle. **In** a case that the brake pedal is not depressed, or the logic gear is not set at the no energy recovery gear position, or the speed of the vehicle is not greater than the third predetermined speed, the instantaneous score $S'_{a3}$ is equal to zero. **In** Table 4, "*" represents a point adding region, and "**" represents a point deducting region. It should be noted that Table 4 only exemplarily shows the corresponding relationship between the acceleration and the instantaneous score. The detail value of the instantaneous score corresponding to the acceleration may be determined based on the vehicle and the actual situation. However, operations of adopting a predetermined corresponding relationship between the acceleration and the instantaneous score and determining the instantaneous score based on the predetermined corresponding relationship after obtaining an acceleration should fall within the protection scope of the present disclosure.

Table 4 Instantaneous deducted/added point $S'_{a3}$ corresponding to acceleration of a vehicle decelerated in a case of no energy recovery

| Acceleration of vehicle | | | |
|---|---|---|---|
| Instantaneous score | * | 0 | * * |

(4) Score $S_V$ module based on a speed of the vehicle

The driving score determined based on the speed of the vehicle is the single-score corresponding to the speed situation of the vehicle in the embodiments of the present disclosure. Information of the speed situation includes the speed of the vehicle. The usual speed in urban conditions is less than 60km/h. An economic speed section of the vehicle is identified. In a case that the vehicle is driven economically, an appropriate point is added. In a case that the speed of the vehicle is greater than a fourth predetermined speed, a greater point is deducted with the increase of the speed of the vehicle, and a maximum point is deducted when the speed of the vehicle reaches a maximum speed. The fourth predetermined speed may be determined according to actual situations, such as the situation of the vehicle and the driving situation of the vehicle. The driving score is determined based on the speed of the vehicle by performing the following operations.

In a case that the speed of the vehicle is greater than the fourth predetermined speed, an average deducted/added point is determined based on a current speed of the vehicle by using the following equation:

$$S'_{vAverage} = \frac{\int S'_v \, dt}{t4}$$

A driving score is determined based on the current speed of the vehicle by using the following equation:

$$S_v(n+1)=S_v(n)+S'_{vAverage}=S_v(n) + \frac{\int S'_v \, dt}{t4}, \ (n=1,2,3,4\ldots\ldots).$$

In the equations, $S_v$ represents the driving score determined based on the speed of the vehicle; n represents a sequence number of a scoring period; $S_v(n+1)$ represents a driving score in an (n+1)th scoring period; $S_{v(n)}$ represents a driving score in an (n)th scoring period; an initial value of $S_{v(n)}$ is greater than or equal to 0 and less than or equal to 10; t4 represents a duration of a scoring period in which the driving score is determined based on the speed of the vehicle; $S'_{vAverage}$ represents an average deducted/added point determined based on an speed of the vehicle in t4; and $S'_v$ represents an instantaneous deducted/added point determined based on the speed of the vehicle, that is, an instantaneous score corresponding to a speed of the vehicle at a time instant. **In** the embodiments of the present disclosure, the instantaneous score may be determined based on an instantaneous scoring rule corresponding to the determining the driving score based on the speed of the vehicle. The value of the instantaneous deducted/added point $S'_v$ may be obtained according to a corresponding relationship between the speed of the vehicle and the instantaneous score shown in Table 5. **In** Table 5, "*" represents a point adding region and "**" represents a point deducting region. It should be noted that Table 5 only exemplarily shows the corresponding relationship between the speed of the vehicle and the instantaneous score. The detail value of the instantaneous score corresponding to the speed of the vehicle may be determined based on the vehicle and the actual situation. However, operations of adopting a predetermined corresponding relationship between the speed of the vehicle and the instantaneous score and determining the instantaneous score based on the predetermined corresponding relationship after obtaining a speed of a vehicle should fall within the protection scope of the present disclosure.

Table 5 Corresponding relationship between Speed of vehicle and instantaneous deducted/added point $S'_v$

| Speed of vehicle | ≤fourth predetermined speed | | | | ≥maximum speed |
|---|---|---|---|---|---|
| Instantaneous score | 0 | * | 0 | ** | * * |

(5) Score $S_{ac}$ module based on high-voltage accessory consumption

The driving score determined based on the high-voltage accessory consumption is the single-score corresponding to the high-voltage accessory consumption situation of the vehicle in the embodiments of the present disclosure. In determining the driving score based on the high-voltage accessory consumption, the driving score may be determined based on a power of an air conditioner. Information of the high-voltage accessory consumption includes the power of the air conditioner. The driving score may be determined based on the power of the air conditioner by performing the following operations.

An average deducted/added point is determined based on the power of the air conditioner by using the following equation:

$$S'_{acAverage} = \frac{\int S'_{ac}\, \mathrm{dt}}{t5}$$

A driving score determined based on the power of the air conditioner is calculated by using the following equation:

$$S_{ac}(n+1)=S_{ac}(n)+S'_{acAverage}=S_{ac}(n) + \frac{\int S'_{ac}\, \mathrm{dt}}{t5},\ (n=1,2,3,4\ldots\ldots).$$

In the above equations, $S_{ac}$ represents a driving score determined based on the power of the air conditioner; n represents a sequence number of a scoring period; $S_{ac}(n+1)$ represents a driving score in an (n+1)th scoring period; $S_{ac(n)}$ represents a driving score in an (n)th scoring period; an initial value of $S_{ac(n)}$ is greater than or equal to 0 and less than or equal to 10; t5 represents a duration of a scoring period in which the driving score is determined based on the power of the air conditioner; $S'_{acAverage}$ represents an average deducted/added point determined based on a power of the air conditioner in t5; and $S'_{ac}$ represents an instantaneous deducted/added point determined based on the power of the air conditioner, that is, an instantaneous score corresponding to the power of the air conditioner at a time instant. In the embodiment of the present disclosure, the instantaneous score may be determined based on an instantaneous scoring rule corresponding to the determining the driving score based on the power of the air conditioner. The value of the instantaneous deducted/added point $S'_{ac}$ may be obtained according to the corresponding relationship between the power of the air conditioner and the instantaneous score shown in Table 6. In Table 6, "*" represents a point adding region and "**" represents a point reducing region. It should be noted that Table 6 only exemplarily shows the corresponding relationship between the power of the air conditioner and the instantaneous score. The detail value of the instantaneous score corresponding to the power of the air conditioner may be determined based on the vehicle and the actual situation. However, operations of adopting a predetermined corresponding relationship between the power of the air conditioner and the instantaneous score and determining the instantaneous score based on the predetermined corresponding relationship after obtaining a power of the air conditioner should fall within the protection scope of the present disclosure.

Table 6 Corresponding relationship between power of air conditioner and instantaneous deducted/added point $S'_{ac}$

| Power of air conditioner | | | | |
|---|---|---|---|---|
| Instantaneous score | * | 0 | 0 | ** |

In an embodiment of the present disclosure, the driver may be informed of the evaluation of the driving situation of the driver. For example, the driver may be informed of a single-score corresponding to each of the evaluation factors and/or the total score corresponding to the evaluation factors. In addition, the driver may be informed of the score in many ways. For example, the single-score and/or the total score are displayed on a display screen, and the driver may be informed of the single-score and/or the total score by a voice broadcast. In addition, a high score indicates a good driving situation, and a low score indicates a bad driving situation which should be improved. After obtaining a single-score corresponding to each of the evaluation factors and/or the total score corresponding to the evaluation factors, the driver may know the driving situation, and then improve a driving behavior corresponding to a low score to increase the score. Thus, the driver can be scientifically guided to drive economically and cultivate good driving habits.

A device for evaluating a driving situation of a driver is provided according to an embodiment of the present disclosure. Figure 2 is a schematic structural diagram of a device for evaluating a driving situation of a driver according to an embodiment of the present disclosure. As shown in Figure 2, the device includes an acquiring module 1 and a processing module 2. The acquiring module 1 is configured to acquire information of one or more evaluation factors. The processing module 2 is configured to, for each of the evaluation factors, determine an instantaneous score corresponding to the evaluation factor based on an instantaneous scoring rule corresponding to the evaluation factor and information of the evaluation factor, and determine a single-score corresponding to the evaluation factor based on the instantaneous score corresponding to the evaluation factor. The single-score corresponding to the evaluation factor indicates an evaluation of the driving situation of the driver.

In the embodiment of the present disclosure, the processing module is further configured to determine a total score corresponding to the evaluation factors based on the single-score corresponding to each of the evaluation factors and a predetermined weight corresponding to each of the evaluation factors. The evaluation of the driving situation of the driver includes the total score.

In an embodiment of the present disclosure, the device further includes an informing module. The informing module is configured to inform the driver of the single-score corresponding to each of the evaluation factors.

In an embodiment of the present disclosure, the evaluation factors includes at least one of an acceleration situation of a vehicle, a deceleration situation of the vehicle in a case of energy recovery, a deceleration situation of the vehicle in a case of no energy recovery, a speed situation of the vehicle, and a high-voltage accessory consumption situation of the vehicle.

In an embodiment of the present disclosure, in a case that the evaluation factors include the acceleration situation of the vehicle, information of the acceleration situation includes: whether an accelerator pedal is depressed, whether a logical gear is set at a driving gear position, an acceleration of the vehicle and a speed of the vehicle; and the process of determining, for each of the evaluation factors, an instantaneous score corresponding to the evaluation factor based on an instantaneous scoring rule corresponding to the evaluation factor information of the evaluation factor includes the following operations: in a case that the accelerator pedal is depressed, the logical gear is set at a driving gear position, and the speed of the vehicle is greater than a first predetermined speed, an instantaneous score corresponding to the acceleration situation is determined based on the acceleration of the vehicle, the speed of the vehicle, and an instantaneous scoring rule corresponding to the acceleration and the speed; and in a case that the accelerator pedal is not depressed, or the logical gear is not set at a driving gear position, or the speed of the vehicle is not greater than a first predetermined speed, an instantaneous score corresponding to the acceleration situation is determined to be zero; and/or in a case that the evaluation factors include the deceleration situation of the vehicle in the case of energy recovery, information of the deceleration situation of the vehicle in the case of energy recovery includes: whether a logical gear is set at an energy recovery gear position, an acceleration of the vehicle, and a speed of the vehicle; the process of determining, for each of the evaluation factors, an instantaneous score corresponding to the evaluation factor based on an instantaneous scoring rule corresponding to the evaluation factor and information of the evaluation factor includes the following operations: in a case that the logical gear is set at the energy recovery gear position and the speed of the vehicle is greater than a second predetermined speed, an instantaneous score corresponding to the deceleration situation of the vehicle in the case of energy recovery is determined based on the acceleration and an instantaneous scoring rule corresponding to the acceleration; and in a case that the logical gear is not set at an energy recovery gear or the speed of the vehicle is not greater than a second predetermined speed, an instantaneous score corresponding to the deceleration situation of the vehicle in the case of energy recovery is determined to be zero; and/or in a case that the evaluation factors include the deceleration situation of the vehicle in the case of no energy recovery, information of the deceleration situation of the vehicle in the case of no energy recovery includes: whether a brake pedal is depressed, whether the logic gear is set at a no energy recovery gear position, a speed of the vehicle, and an acceleration of the vehicle; the process of determining, for each of the evaluation factors, an instantaneous score corresponding to the evaluation factor based on an instantaneous scoring rule corresponding to the evaluation factor and information of the evaluation factor includes the following operations: in a case that the brake pedal is depressed, the logic gear is set at the no energy recovery gear position, and the speed of the vehicle is greater than a third predetermined speed, an instantaneous score corresponding to the deceleration situation of the vehicle in the case of no energy recovery is determined based on the acceleration of the vehicle and an instantaneous scoring rule corresponding to the acceleration; and in a case that the brake pedal is not depressed, or the logic gear is not set at a no energy recovery gear position, or the speed of the vehicle is not greater than the third predetermined speed, an instantaneous score corresponding to the deceleration situation of the vehicle in the case of no energy recovery is determined to be zero; and/or in a case that the evaluation factors include the speed situation of the vehicle, information of the speed situation of the vehicle includes a speed of the vehicle; the process of determining, for each of the evaluation factors, an instantaneous score corresponding to the evaluation factor based on an instantaneous scoring rule corresponding to the evaluation factor and information of the evaluation factor includes the following operations: in a case that the speed of the vehicle is greater than a fourth predetermined speed, an instantaneous score corresponding to the speed situation is determined based on the speed of the vehicle and an instantaneous scoring rule corresponding to the speed of the vehicle; and in a case that the speed of the vehicle is less than or equal to a fourth speed, an instantaneous score corresponding to the acceleration situation is determined to be zero; and/or in a case that the evaluation factors include the high-voltage accessory consumption situation, the process of determining, for each of the evaluation factors, an instantaneous score corresponding to the evaluation factor based on an instantaneous scoring rule corresponding to the evaluation factor and information of the evaluation factor includes the following operation: an instantaneous score corresponding to the high-voltage accessory consumption situation is determined based on a power of an air conditioner and an instantaneous scoring rule corresponding to the power of the air conditioner.

In an embodiment of the present disclosure, the process of determining, for each of the evaluation factors, a single-score corresponding to the evaluation factor based on the instantaneous score corresponding to the evaluation factor is performed by using the following equation:

$$S_{ai}(n+1) = S_{ai}(n) + \frac{\int S'_{ai}\mathrm{dt}}{t}$$

where $S'_{ai}$ represents an instantaneous score corresponding to an evaluation factor i at a time instant, t represents a duration of a scoring period, n represents a sequence number of the scoring period, $S_{ai}(n+1)$ represents a single-score corresponding to the evaluation factor i in an (n+1)th scoring period, and $S_{ai}(n)$ represents a single-score corresponding to the evaluation factor i in an (n)th scoring period.

Operation principles and advantages of the device for evaluating a driving situation of a driver according to the embodiments of the present disclosure are similar to the operation principles and advantages of the method for evaluating a driving situation of a driver according to the embodiments of the present disclosure, which are not repeated herein.

A machine readable storage medium is further provided according to an embodiment of the present disclosure. The machine readable storage medium stores instructions. The instructions, when executed by a machine, cause the machine to perform the method described in the above embodiments.

A processor is further provided according to an embodiment of the present disclosure. The processor is configured to perform the method described in the above embodiments when executing a program.

In an embodiment of the present disclosure, the processor may be a controller, such as an electronic control unit (ECU), of the vehicle. The processor acquires information of the evaluation factors, such as the speed of the vehicle, via a CAN bus of the vehicle, where the information of the evaluation factors is collected by a sensor on the vehicle., Then, the processor performs the method for evaluating a driving situation of a driver according to the embodiments by using a predetermined algorithm module, and displays a single-score obtained by performing the method on an instrument of the vehicle to inform the driver.

The foregoing embodiments are merely preferred embodiments of the present disclosure and are not intended to limit the present disclosure. Any modifications, equivalent substitutions and improvements made within the spirit and the principle of the present disclosure are within the protection scope of the present disclosure.

Optional embodiments of the present disclosure are described in detail above in conjunction with the drawings. However, the embodiments of the present disclosure are not limited to the details in the above embodiments. Various simple variants of the technical solutions of the embodiments of the present disclosure may be made within the scope of the technical conception of the embodiments of the present disclosure, and these simple variants fall within the protection scope of the embodiments of the present disclosure.

In addition, it should be noted that various technical features described in the above embodiments may be combined in any appropriate manner if there is no contradiction. In order to avoid unnecessary repetition, various possible combinations are not described in the embodiments of the present disclosure.

Those skilled in the art should understand that all or part of the steps in the method according to the above embodiments may be performed by instructing relevant hardware through a program. The program is stored in a storage medium and includes multiple instructions. The instructions, when executed by a single-chip microcomputer, a chip or a processor, cause the single-chip microcomputer, the chip or the processor to perform all or part of steps of the method according to the embodiments of the present disclosure. The storage medium includes various media which can store program codes, such as a USB disk, a mobile hard disk, a Read-Only Memory (ROM), a Random Access Memory (RAM), a magnetic disk, or an optical disc.

In addition, various implementations of the embodiments of the present disclosure may be combined arbitrarily as long as the idea of the embodiments of the present disclosure is not violated, and these combinations should be regarded as the contents disclosed in the embodiments of the present disclosure.

**Claims**

1. A method for evaluating a driving situation of a driver, comprising:

   acquiring information of one or more evaluation factors;
   for each of the evaluation factors,

      determining an instantaneous score corresponding to the evaluation factor based on an instantaneous scoring rule corresponding to the evaluation factor and information of the evaluation factor; and determining a single-score corresponding to the evaluation factor based on the determined instantaneous score corresponding to the evaluation factor, wherein the single-score corresponding to the evaluation factor indicates an evaluation of the driving situation of the driver, wherein

the evaluation factors comprise at least one of an acceleration situation of a vehicle, a deceleration situation of the vehicle in a case of energy recovery, a deceleration situation of the vehicle in a case of no energy recovery, a speed situation of the vehicle, and a high-voltage accessory consumption situation of the vehicle,

wherein:

in a case that the evaluation factors comprise the acceleration situation of the vehicle,

information of the acceleration situation comprises: whether an accelerator pedal is depressed, whether a logical gear is set at a driving gear position, an acceleration of the vehicle, and a speed of the vehicle; the determining, for each of the evaluation factors, an instantaneous score corresponding to the evaluation factor based on an instantaneous scoring rule corresponding to the evaluation factor and information of the evaluation factor comprises:

in a case that the accelerator pedal is depressed, the logical gear is set at the driving gear position, and the speed of the vehicle is greater than a first predetermined speed, determining an instantaneous score corresponding to the acceleration situation based on the acceleration of the vehicle, the speed of the vehicle, and an instantaneous scoring rule corresponding to the acceleration and the speed; and in a case that the accelerator pedal is not depressed, or the logical gear is not set at a driving gear position, or the speed of the vehicle is not greater than a first predetermined speed, determining an instantaneous score corresponding to the acceleration situation to be zero; and/or

in a case that the evaluation factors comprise the deceleration situation of the vehicle in the case of energy recovery,

information of the deceleration situation of the vehicle in the case of energy recovery comprises: whether a logical gear is set at an energy recovery gear position, an acceleration of the vehicle, and a speed of the vehicle; the determining, for each of the evaluation factors, an instantaneous score corresponding to the evaluation factor based on an instantaneous scoring rule corresponding to the evaluation factor and information of the evaluation factor comprises:

in a case that the logical gear is set at the energy recovery gear position and the speed of the vehicle is greater than a second predetermined speed, determining an instantaneous score corresponding to the deceleration situation of the vehicle in the case of energy recovery based on the acceleration and an instantaneous scoring rule corresponding to the acceleration; and in a case that the logical gear is not set at an energy recovery gear position or the speed of the vehicle is not greater than a second predetermined speed, determining an instantaneous score corresponding to the deceleration situation of the vehicle in the case of energy recovery to be zero; and/or

in a case that the evaluation factors comprise the deceleration situation of the vehicle in the case of no energy recovery,

information of the deceleration situation of the vehicle in the case of no energy recovery comprises: whether a brake pedal is depressed, whether a logic gear is set at a no energy recovery gear position, a speed of the vehicle, and an acceleration of the vehicle; the determining, for each of the evaluation factors, an instantaneous score corresponding to the evaluation factor based on an instantaneous scoring rule corresponding to the evaluation factor and information of the evaluation factor comprises:

in a case that the brake pedal is depressed, the logic gear is set at the no energy recovery gear position, and the speed of the vehicle is greater than a third predetermined speed, determining an instantaneous score corresponding to the deceleration situation of the vehicle in the case of no energy recovery based on the acceleration of the vehicle and an instantaneous scoring rule corresponding to the acceleration; and

in a case that the brake pedal is not depressed, or the logic gear is not set at a no energy recovery gear position, or the speed of the vehicle is not greater than a third predetermined speed, determining an instantaneous score corresponding to the deceleration situation of the vehicle in the case of no energy recovery to be zero; and/or

in a case that the evaluation factors comprise the speed situation of the vehicle,

information of the speed situation of the vehicle comprises a speed of the vehicle; the determining, for each of the evaluation factors, an instantaneous score corresponding to the evaluation factor based on an instantaneous scoring rule corresponding to the evaluation factor and information of the evaluation factor comprises:

in a case that the speed of the vehicle is greater than a fourth predetermined speed, determining an instantaneous score corresponding to the speed situation based on the speed of the vehicle and an instantaneous scoring rule corresponding to the speed of the vehicle; and in a case that the speed of the vehicle is less than or equal to a fourth speed, determining an instantaneous score corresponding to the acceleration situation to be zero; and/or

in a case that the evaluation factors comprise the high-voltage accessory consumption situation, the determining, for each of the evaluation factors, an instantaneous score corresponding to the evaluation factor based on an instantaneous scoring rule corresponding to the evaluation factor and information of the evaluation factor comprises: determining an instantaneous score corresponding to the high-voltage accessory consumption situation based on a power of an air conditioner and an instantaneous scoring rule corresponding to the power of the air conditioner.

2.  The method for evaluating a driving situation of a driver according to claim 1, further comprising: determining a total score corresponding to the evaluation factors based on the single-score corresponding to each of the evaluation factors and a predetermined weight corresponding to each of the evaluation factors, wherein the evaluation of the driving situation of the driver comprises the total score.

3.  The method for evaluating a driving situation of a driver according to claim 1, further comprising: informing the driver of the single-score corresponding to each of the evaluation factors.

4.  The method for evaluating a driving situation of a driver according to any one of claims 1 to 3, wherein the determining, for each of the evaluation factors, a single-score corresponding to the evaluation factor based on the determined instantaneous score corresponding to the evaluation factor is performed by using the following equation:

$$S_{ai}(n+1) = S_{ai}(n) + \frac{\int S'_{ai} \mathrm{dt}}{t}$$

where $S'_{ai}$ represents an instantaneous score corresponding to an evaluation factor i at an time instant, t represents a duration of a scoring period, n represents a sequence number of the scoring period, $S_{ai}(n+1)$ represents a single-score corresponding to the evaluation factor i in an (n+1)th scoring period, and $S_{ai}(n)$ represents a single-score corresponding to the evaluation factor i in an (n)th scoring period.

5.  A device for evaluating a driving situation of a driver, comprising:

an acquiring module1, configured to acquire information of one or more evaluation factors; and a processing module2, configured to

for each of the evaluation factors, determine an instantaneous score corresponding to the evaluation factor based on an instantaneous scoring rule corresponding to the evaluation factor and information of the evaluation factor, and determine a single-score corresponding to the evaluation factor based on the determined instantaneous score corresponding to the evaluation factor, wherein the single-score corresponding to the evaluation factor indicates an evaluation of the driving situation of the driver
wherein
the evaluation factors comprise at least one of an acceleration situation of a vehicle, a deceleration situation of the vehicle in a case of energy recovery, a deceleration situation of the vehicle in a case of no energy recovery, a speed situation of the vehicle, and a high-voltage accessory consumption situation of the vehicle,

wherein:

in a case that the evaluation factors comprise the acceleration situation of the vehicle,

information of the acceleration situation comprises: whether an accelerator pedal is depressed, whether a logical gear is set at a driving gear position, an acceleration of the vehicle, and a speed of the vehicle; the determining, for each of the evaluation factors, an instantaneous score corresponding to the evaluation factor based on an instantaneous scoring rule corresponding to the evaluation factor and information of the evaluation factor comprises:

in a case that the accelerator pedal is depressed, the logical gear is set at the driving gear position, and the speed of the vehicle is greater than a first predetermined speed, determining an instantaneous score corresponding to the acceleration situation based on the acceleration of the vehicle, the speed of the vehicle, and an instantaneous scoring rule corresponding to the acceleration and the speed; and
in a case that the accelerator pedal is not depressed, or the logical gear is not set at a driving gear position, or the speed of the vehicle is not greater than a first predetermined speed, determining an instantaneous score corresponding to the acceleration situation to be zero; and/or

in a case that the evaluation factors comprise the deceleration situation of the vehicle in the case of energy recovery,

information of the deceleration situation of the vehicle in the case of energy recovery comprises: whether a logical gear is set at an energy recovery gear position, an acceleration of the vehicle, and a speed of the vehicle;
the determining, for each of the evaluation factors, an instantaneous score corresponding to the evaluation factor based on an instantaneous scoring rule corresponding to the evaluation factor and information of the evaluation factor comprises:

in a case that the logical gear is set at the energy recovery gear position and the speed of the vehicle is greater than a second predetermined speed, determining an instantaneous score corresponding to the deceleration situation of the vehicle in the case of energy recovery based on the acceleration and an instantaneous scoring rule corresponding to the acceleration; and
in a case that the logical gear is not set at an energy recovery gear position or the speed of the vehicle is not greater than a second predetermined speed, determining an instantaneous score corresponding to the deceleration situation of the vehicle in the case of energy recovery to be zero; and/or

in a case that the evaluation factors comprise the deceleration situation of the vehicle in the case of no energy recovery,

information of the deceleration situation of the vehicle in the case of no energy recovery comprises: whether a brake pedal is depressed, whether a logic gear is set at a no energy recovery gear position, a speed of the vehicle, and an acceleration of the vehicle;
the determining, for each of the evaluation factors, an instantaneous score corresponding to the evaluation factor based on an instantaneous scoring rule corresponding to the evaluation factor and information of the evaluation factor comprises:

in a case that the brake pedal is depressed, the logic gear is set at the no energy recovery gear position, and the speed of the vehicle is greater than a third predetermined speed, determining an instantaneous score corresponding to the deceleration situation of the vehicle in the case of no energy recovery based on the acceleration of the vehicle and an instantaneous scoring rule corresponding to the acceleration; and

in a case that the brake pedal is not depressed, or the logic gear is not set at a no energy recovery gear position, or the speed of the vehicle is not greater than a third predetermined speed, determining an instantaneous score corresponding to the deceleration situation of the vehicle in the case of no energy recovery to be zero; and/or

in a case that the evaluation factors comprise the speed situation of the vehicle,

information of the speed situation of the vehicle comprises a speed of the vehicle;
the determining, for each of the evaluation factors, an instantaneous score corresponding to the evaluation factor based on an instantaneous scoring rule corresponding to the evaluation factor and information of the evaluation factor comprises:

in a case that the speed of the vehicle is greater than a fourth predetermined speed, determining an instantaneous score corresponding to the speed situation based on the speed of the vehicle and an instantaneous scoring rule corresponding to the speed of the vehicle; and
in a case that the speed of the vehicle is less than or equal to a fourth speed, determining an instantaneous score corresponding to the acceleration situation to be zero; and/or

in a case that the evaluation factors comprise the high-voltage accessory consumption situation,
the determining, for each of the evaluation factors, an instantaneous score corresponding to the evaluation factor based on an instantaneous scoring rule corresponding to the evaluation factor and information of the evaluation factor comprises: determining an instantaneous score corresponding to the high-voltage accessory consumption situation based on a power of an air conditioner and an instantaneous scoring rule corresponding to the power of the air conditioner.

6. The device for evaluating a driving situation of a driver according to claim 5, wherein the processing module2 is further configured to determine a total score corresponding to the evaluation factors based on the single-score corresponding to each of the evaluation factors and a predetermined weight corresponding to each of the evaluation factors, wherein the evaluation of the driving situation of the driver comprises the total score.

7. The device for evaluating a driving situation of a driver according to claim 5 or 6, further comprising:
an informing module, configured to inform the driver of the single-score corresponding to each of the evaluation factors.

8. A machine readable storage medium storing instructions, wherein the instructions, when executed by a machine, cause the machine to perform the method according to any one of claims 1 to 4.

9. A processor, configured to perform the method according to any one of claims 1 to 4 when executing a program.

**Patentansprüche**

1. Verfahren zur Bewertung einer Fahrsituation eines Fahrers, umfassend:

Erfassen von Informationen zu einem oder mehreren Bewertungsfaktoren;
für jeden der Bewertungsfaktoren

Bestimmen einer Momentanbewertung, die dem Bewertungsfaktor entspricht, basierend auf einer Momentanbewertungsregel, die dem Bewertungsfaktor und den Informationen des Bewertungsfaktors entspricht; und
Bestimmen einer dem Bewertungsfaktor entsprechenden Einzelpunktzahl auf der Grundlage der bestimmten, dem Bewertungsfaktor entsprechenden Momentanbewertung, wobei die dem Bewertungsfaktor entsprechende Einzelpunktzahl eine Bewertung der Fahrsituation des Fahrers angibt, wobei
die Bewertungsfaktoren mindestens einen der folgenden Faktoren umfassen: eine Beschleunigungssituation eines Fahrzeugs, eine Verzögerungssituation des Fahrzeugs im Falle einer Energierückgewinnung, eine Verzögerungssituation des Fahrzeugs im Falle keiner Energierückgewinnung, eine Geschwindigkeitssituation des Fahrzeugs und eine Situation des Verbrauchs von Hochspannungszubehör des Fahrzeugs,

wobei:

in einem Fall, in dem die Bewertungsfaktoren die Beschleunigungssituation des Fahrzeugs umfassen,

die Informationen über die Beschleunigungssituation Folgendes umfassen: ob ein Gaspedal betätigt wird, ob ein logischer Gang in einer Fahrgangstellung eingelegt ist, eine Beschleunigung des Fahrzeugs und eine Geschwindigkeit des Fahrzeugs; das Bestimmen für jeden der Bewertungsfaktoren einer Momentanbewertung, die dem Bewertungsfaktor entspricht, basierend auf einer Momentanbewertungsregel, die dem Bewertungsfaktor entspricht, und Informationen über den Bewertungsfaktor umfassen:

in einem Fall, in dem das Gaspedal betätigt wird, der logische Gang auf die Fahrgangposition eingestellt ist und die Geschwindigkeit des Fahrzeugs größer als eine erste vorbestimmte Geschwindigkeit ist, Ermitteln einer Momentanbewertung entsprechend der Beschleunigungssituation auf der Grundlage der Beschleunigung des Fahrzeugs, der Geschwindigkeit des Fahrzeugs und einer Momentanbewertungsregel entsprechend der Beschleunigung und der Geschwindigkeit; und in einem Fall, in dem das Gaspedal nicht betätigt wird oder der logische Gang nicht auf eine Fahrgangstellung eingestellt ist oder die Geschwindigkeit des Fahrzeugs nicht größer als eine erste vorbestimmte Geschwindigkeit ist, wird eine Momentanbewertung entsprechend der Beschleunigungssituation auf Null festgelegt; und/oder

in einem Fall, in dem die Bewertungsfaktoren die Verzögerungssituation des Fahrzeugs im Falle einer Energierückgewinnung umfassen,

die Informationen über die Verzögerungssituation des Fahrzeugs im Falle einer Energierückgewinnung umfassen: ob ein logischer Gang in eine Energierückgewinnungsgangposition geschaltet ist, eine Beschleunigung des Fahrzeugs und eine Geschwindigkeit des Fahrzeugs; das Bestimmen für jeden der Bewertungsfaktoren einer Momentanbewertung, die dem Bewertungsfaktor entspricht, basierend auf einer Momentanbewertungsregel, die dem Bewertungsfaktor entspricht, und Informationen über den Bewertungsfaktor umfassen:

in einem Fall, in dem der logische Gang auf die Energierückgewinnungsgangposition eingestellt ist und die Geschwindigkeit des Fahrzeugs größer als eine zweite vorbestimmte Geschwindigkeit ist, das Bestimmen einer Momentanbewertung, die der Verzögerungssituation des Fahrzeugs im Falle einer Energierückgewinnung entspricht, basierend auf der Beschleunigung und einer Momentanbewertungsregel die der Beschleunigung entspricht; und in einem Fall, in dem das logische Getriebe nicht auf eine Energierückgewinnungs-Getriebestellung eingestellt ist oder die Geschwindigkeit des Fahrzeugs nicht größer als eine zweite vorbestimmte Geschwindigkeit ist, Bestimmen einer Momentanbewertung, die der Verzögerungssituation des Fahrzeugs im Fall einer Energierückgewinnung entspricht, als Null; und/oder

in einem Fall, in dem die Bewertungsfaktoren die Verzögerungssituation des Fahrzeugs im Fall ohne Energierückgewinnung umfassen,

Informationen über die Verzögerungssituation des Fahrzeugs im Falle keiner Energierückgewinnung umfassen: ob ein Bremspedal betätigt wird, ob ein logischer Gang in eine Gangposition ohne Energierückgewinnung geschaltet ist, eine Geschwindigkeit des Fahrzeugs und eine Beschleunigung des Fahrzeugs; das Bestimmen für jeden der Bewertungsfaktoren einer momentanen Punktzahl, die dem Bewertungsfaktor entspricht, basierend auf einer momentanen Bewertungsregel, die dem Bewertungsfaktor entspricht, und Informationen über den Bewertungsfaktor umfassen:

in einem Fall, in dem das Bremspedal betätigt ist, der Logikgang auf die Gangposition ohne Energierückgewinnung eingestellt ist und die Geschwindigkeit des Fahrzeugs größer als eine dritte vorbestimmte Geschwindigkeit ist, das Bestimmen einer Momentanbewertung, die der Verzögerungssituation des Fahrzeugs im Fall ohne Energierückgewinnung entspricht, basierend auf der Beschleunigung des Fahrzeugs und einer Momentanbewertungsregel, die der Beschleunigung entspricht; und
in einem Fall, in dem das Bremspedal nicht betätigt wird oder der Logikgang nicht auf eine Position ohne Energierückgewinnung eingestellt ist oder die Geschwindigkeit des Fahrzeugs nicht größer als eine dritte vorbestimmte Geschwindigkeit ist, wird eine Momentanbewertung entsprechend der Verzögerungssituation des Fahrzeugs im Fall ohne Energierückgewinnung auf Null gesetzt; und/oder

in einem Fall, in dem die Bewertungsfaktoren die Geschwindigkeitssituation des Fahrzeugs umfassen,

Informationen über die Geschwindigkeitssituation des Fahrzeugs umfassen eine Geschwindigkeit des Fahrzeugs;
das Bestimmen für jeden der Bewertungsfaktoren einer Momentanbewertung, die dem Bewertungsfaktor entspricht, basierend auf einer Momentanbewertungsregel, die dem Bewertungsfaktor entspricht, und Informationen über den Bewertungsfaktor, umfasst:

in einem Fall, in dem die Geschwindigkeit des Fahrzeugs größer als eine vierte vorbestimmte Geschwindigkeit ist, das Bestimmen einer Momentanbewertung, die der Geschwindigkeitssituation entspricht, basierend auf der Geschwindigkeit des Fahrzeugs und einer Momentanbewertungsregel, die der Geschwindigkeit des Fahrzeugs entspricht; und
in einem Fall, in dem die Geschwindigkeit des Fahrzeugs kleiner oder gleich einer vierten Geschwindigkeit ist, das Bestimmen einer Momentanbewertung, die der Beschleunigungssituation entspricht, als Null; und/oder

in einem Fall, in dem die Bewertungsfaktoren die Hochspannungszubehör-Verbrauchssituation umfassen, für jeden der Bewertungsfaktoren eine Momentanbewertung entsprechend dem Bewertungsfaktor auf der Grundlage einer Momentanbewertungsregel entsprechend dem Bewertungsfaktor und Informationen des Bewertungsfaktors zu bestimmen, umfasst: Bestimmen einer Momentanbewertung entsprechend der Hochspannungszusatzverbrauchs-Situation auf der Grundlage einer Leistung einer Klimaanlage und einer Momentanbewertungsregel entsprechend der Leistung der Klimaanlage.

2. Verfahren zum Bewerten einer Fahrsituation eines Fahrers gemäß Anspruch 1, das ferner umfasst
Bestimmen einer Gesamtpunktzahl entsprechend den Bewertungsfaktoren auf der Grundlage der Einzelpunktzahl entsprechend jedem der Bewertungsfaktoren und einer vorbestimmten Gewichtung entsprechend jedem der Bewertungsfaktoren, wobei die Bewertung der Fahrsituation des Fahrers die Gesamtpunktzahl umfasst.

3. Verfahren zur Bewertung einer Fahrsituation eines Fahrers gemäß Anspruch 1, ferner umfassend:
den Fahrer über die Einzelbewertung informieren, die jedem der Bewertungsfaktoren entspricht.

4. Verfahren zur Bewertung einer Fahrsituation eines Fahrers gemäß einem der Ansprüche 1 bis 3, wobei die Bestimmung einer Einzelbewertung für jeden der Bewertungsfaktoren, die dem Bewertungsfaktor entspricht, auf der Grundlage der ermittelten Momentanbewertung, die dem Bewertungsfaktor entspricht, unter Verwendung der folgenden Gleichung erfolgt:

$$S_{ai}(n + 1) = S_{ai}(n) + \frac{\int S'_{ai}\mathrm{dt}}{t}$$

wobei S'$_{ai}$ eine Momentanbewertung darstellt, die einem Bewertungsfaktor i zu einem Zeitpunkt t entspricht, t eine Dauer eines Bewertungszeitraums darstellt, n eine Sequenznummer des Bewertungszeitraums darstellt, $S_{ai}$ (n+1) eine Einzelpunktzahl darstellt, die dem Bewertungsfaktor i in einem (n+1)-ten Bewertungszeitraum entspricht, und $S_{ai}$ (n) eine Einzelpunktzahl darstellt, die dem Bewertungsfaktor i in einem (n)-ten Bewertungszeitraum entspricht.

5. Vorrichtung zum Bewerten einer Fahrsituation eines Fahrers, umfassend:

ein Erfassungsmodul1, das zum Erfassen von Informationen eines oder mehrerer Bewertungsfaktoren konfiguriert ist; und
ein Verarbeitungsmodul 2, das so konfiguriert ist, dass es

für jeden der Bewertungsfaktoren

Bestimmen einer Momentanbewertung, die dem Bewertungsfaktor entspricht, basierend auf einer Momentanbewertungsregel, die dem Bewertungsfaktor entspricht, und Informationen über den Bewertungsfaktor, und

Bestimmen einer Einzelpunktzahl entsprechend dem Bewertungsfaktor auf der Grundlage der ermittelten Momentanbewertung entsprechend dem Bewertungsfaktor, wobei die Einzelpunktzahl entsprechend dem Bewertungsfaktor eine Bewertung der Fahrsituation des Fahrers angibt

wobei

die Bewertungsfaktoren mindestens einen der folgenden Faktoren umfassen: eine Beschleunigungssituation eines Fahrzeugs, eine Verzögerungssituation des Fahrzeugs im Falle einer Energierückgewinnung, eine Verzögerungssituation des Fahrzeugs im Falle keiner Energierückgewinnung, eine Geschwindigkeitssituation des Fahrzeugs und eine Hochspannungszubehör-Verbrauchssituation des Fahrzeugs,

wobei

in einem Fall, in dem die Bewertungsfaktoren die Beschleunigungssituation des Fahrzeugs umfassen,

die Informationen über die Beschleunigungssituation Folgendes umfassen: ob ein Gaspedal betätigt wird, ob ein logischer Gang in einer Fahrgangstellung eingelegt ist, eine Beschleunigung des Fahrzeugs und eine Geschwindigkeit des Fahrzeugs;

das Bestimmen für jeden der Bewertungsfaktoren einer Momentanbewertung, die dem Bewertungsfaktor entspricht, basierend auf einer Momentanbewertungsregel, die dem Bewertungsfaktor entspricht, und Informationen über den Bewertungsfaktor umfassen:

in einem Fall, in dem das Gaspedal betätigt wird, der logische Gang auf die Fahrgangposition eingestellt ist und die Geschwindigkeit des Fahrzeugs größer als eine erste vorbestimmte Geschwindigkeit ist, Ermitteln einer Momentanbewertung entsprechend der Beschleunigungssituation auf der Grundlage der Beschleunigung des Fahrzeugs, der Geschwindigkeit des Fahrzeugs und einer Momentanbewertungsregel entsprechend der Beschleunigung und der Geschwindigkeit; und

in einem Fall, in dem das Gaspedal nicht betätigt wird oder der logische Gang nicht auf eine Fahrgangstellung eingestellt ist oder die Geschwindigkeit des Fahrzeugs nicht größer als eine erste vorbestimmte Geschwindigkeit ist, wird eine Momentanbewertung entsprechend der Beschleunigungssituation auf Null festgelegt; und/oder

in einem Fall, in dem die Bewertungsfaktoren die Verzögerungssituation des Fahrzeugs im Falle einer Energierückgewinnung umfassen,

die Informationen über die Verzögerungssituation des Fahrzeugs im Falle einer Energierückgewinnung umfassen: ob ein logischer Gang in eine Energierückgewinnungsgangposition geschaltet ist, eine Beschleunigung des Fahrzeugs und eine Geschwindigkeit des Fahrzeugs;

das Bestimmen für jeden der Bewertungsfaktoren einer Momentanbewertung, die dem Bewertungsfaktor entspricht, basierend auf einer Momentanbewertungsregel, die dem Bewertungsfaktor entspricht, und Informationen über den Bewertungsfaktor umfassen:

in einem Fall, in dem der logische Gang auf die Energierückgewinnungsgangposition eingestellt ist und die Geschwindigkeit des Fahrzeugs größer als eine zweite vorbestimmte Geschwindigkeit ist, das Bestimmen einer Momentanbewertung, die der Verzögerungssituation des Fahrzeugs im Falle einer Energierückgewinnung entspricht, basierend auf der Beschleunigung und einer Momentanbewertungsregel die der Beschleunigung entspricht; und

in einem Fall, in dem das logische Getriebe nicht auf eine Energierückgewinnungs-Getriebestellung eingestellt ist oder die Geschwindigkeit des Fahrzeugs nicht größer als eine zweite vorbestimmte Geschwindigkeit ist, Bestimmen einer Momentanbewertung, die der Verzögerungssituation des Fahrzeugs im Fall einer Energierückgewinnung entspricht, als Null; und/oder

in einem Fall, in dem die Bewertungsfaktoren die Verzögerungssituation des Fahrzeugs im Fall ohne Energierückgewinnung umfassen,

Informationen über die Verzögerungssituation des Fahrzeugs im Falle keiner Energierückgewinnung umfassen: ob ein Bremspedal betätigt wird, ob ein logischer Gang in eine Gangposition ohne Energierückgewinnung geschaltet ist, eine Geschwindigkeit des Fahrzeugs und eine Beschleunigung des Fahrzeugs; das Bestimmen für jeden der Bewertungsfaktoren einer momentanen Punktzahl, die dem Bewertungsfaktor entspricht, basierend auf einer momentanen Bewertungsregel, die dem Bewertungsfaktor entspricht, und Informationen über den Bewertungsfaktor umfassen:

in einem Fall, in dem das Bremspedal betätigt ist, der Logikgang auf die Gangposition ohne Energierückgewinnung eingestellt ist und die Geschwindigkeit des Fahrzeugs größer als eine dritte vorbestimmte Geschwindigkeit ist, das Bestimmen einer Momentanbewertung, die der Verzögerungssituation des Fahrzeugs im Fall ohne Energierückgewinnung entspricht, basierend auf der Beschleunigung des Fahrzeugs und einer Momentanbewertungsregel, die der Beschleunigung entspricht; und in einem Fall, in dem das Bremspedal nicht betätigt wird oder der Logikgang nicht auf eine Position ohne Energierückgewinnung eingestellt ist oder die Geschwindigkeit des Fahrzeugs nicht größer als eine dritte vorbestimmte Geschwindigkeit ist, wird eine Momentanbewertung entsprechend der Verzögerungssituation des Fahrzeugs im Fall ohne Energierückgewinnung auf Null gesetzt; und/oder

in einem Fall, in dem die Bewertungsfaktoren die Geschwindigkeitssituation des Fahrzeugs umfassen,

Informationen über die Geschwindigkeitssituation des Fahrzeugs umfassen eine Geschwindigkeit des Fahrzeugs; das Bestimmen für jeden der Bewertungsfaktoren einer Momentanbewertung, die dem Bewertungsfaktor entspricht, basierend auf einer Momentanbewertungsregel, die dem Bewertungsfaktor entspricht, und Informationen über den Bewertungsfaktor, umfasst:

in einem Fall, in dem die Geschwindigkeit des Fahrzeugs größer als eine vierte vorbestimmte Geschwindigkeit ist, das Bestimmen einer Momentanbewertung, die der Geschwindigkeitssituation entspricht, basierend auf der Geschwindigkeit des Fahrzeugs und einer Momentanbewertungsregel, die der Geschwindigkeit des Fahrzeugs entspricht; und in einem Fall, in dem die Geschwindigkeit des Fahrzeugs kleiner oder gleich einer vierten Geschwindigkeit ist, das Bestimmen einer Momentanbewertung, die der Beschleunigungssituation entspricht, als Null; und/oder

in einem Fall, in dem die Bewertungsfaktoren die Hochspannungszubehör-Verbrauchssituation umfassen, für jeden der Bewertungsfaktoren eine Momentanbewertung entsprechend dem Bewertungsfaktor auf der Grundlage einer Momentanbewertungsregel entsprechend dem Bewertungsfaktor und Informationen des Bewertungsfaktors zu bestimmen, umfasst: Bestimmen einer Momentanbewertung entsprechend der Hochspannungszusatzverbrauchs-Situation auf der Grundlage einer Leistung einer Klimaanlage und einer Momentanbewertungsregel entsprechend der Leistung der Klimaanlage.

6. Vorrichtung zum Bewerten einer Fahrsituation eines Fahrers gemäß Anspruch 5, wobei das Verarbeitungsmodul 2 ferner so konfiguriert ist, dass es eine Gesamtpunktzahl entsprechend den Bewertungsfaktoren auf der Grundlage der Einzelpunktzahl entsprechend jedem der Bewertungsfaktoren und einer vorbestimmten Gewichtung entsprechend jedem der Bewertungsfaktoren bestimmt, wobei die Bewertung der Fahrsituation des Fahrers die Gesamtpunktzahl umfasst.

7. Vorrichtung zur Bewertung einer Fahrsituation eines Fahrers gemäß Anspruch 5 oder 6, die ferner umfasst: ein Informationsmodul, das so konfiguriert ist, dass es den Fahrer über die Einzelpunktzahl informiert, die jedem der Bewertungsfaktoren entspricht.

8. Ein maschinenlesbares Speichermedium, das Befehle speichert, wobei die Befehle, wenn sie von einer Maschine ausgeführt werden, die Maschine veranlassen, das Verfahren gemäß einem der Ansprüche 1 bis 4 auszuführen.

9. Prozessor, der so konfiguriert ist, dass er bei der Ausführung eines Programms das Verfahren gemäß einem der Ansprüche 1 bis 4 ausführt.

**Revendications**

1. Procédé d'évaluation d'une situation de conduite d'un conducteur, comprenant :

l'acquisition d'informations sur un ou plusieurs facteurs d'evaluation ;
pour chacun des facteurs d'evaluation,

la détermination d'une evaluation instantanee correspondant au facteur d'evaluation sur la base d'une regle d'evaluation instantanee correspondant au facteur d'evaluation et aux informations relatives au facteur d'evaluation ; et

la détermination d'un score individuel correspondant au facteur d'évaluation sur la base de l'évaluation instantanee correspondant au facteur d'évaluation, dans lequel le score individuel correspondant au facteur d'évaluation indique une évaluation de la situation de conduite du conducteur, dans lequel

les facteurs d'evaluation comprennent au moins l'un parmi une situation d'acceleration du vehicule, une situation de deceleration du vehicule dans un cas de recuperation d'energie, une situation de deceleration du vehicule dans un cas d'absence de recuperation d'energie, une situation de vitesse du vehicule et une situation de consommation d'accessoires haute tension du vehicule,

dans lequel :

dans le cas où les facteurs d'évaluation comprennent la situation d'acceleration du vehicule,

les informations relatives à la situation d'acceleration comprennent : le fait que la pédale d'accelerateur soit enfoncée ou non, le fait qu'un rapport logique soit engagé ou non, l'acceleration du vehicule et la vitesse du vehicule ;

la détermination, pour chacun des facteurs d'evaluation, d'une évaluation instantanee correspondant au facteur d'evaluation sur la base d'une regle d'evaluation instantanee correspondant au facteur d'evaluation et les informations relatives au facteur d'evaluation comprennent :

dans le cas où la pédale d'accelerateur est enfoncée, où le rapport logique est réglé sur la position de rapport de conduite et où la vitesse du vehicule est superieure a une premiere vitesse predeterminee, effectuer la determination d'une evaluation instantanee correspondant a la situation d'acceleration sur la base de l'acceleration du vehicule, de la vitesse du vehicule et d'une regle d'evaluation instantanee correspondant a l'acceleration et a la vitesse ; et

dans le cas où la pédale d'accélérateur n'est pas enfoncée, ou où le rapport logique n'est pas réglé sur une position de rapport de conduite, ou où la vitesse du vehicule n'est pas supérieure a une premiere vitesse predeterminee, determination d'une evaluation instantanee correspondant a la situation d'acceleration comme égale à zero ; et/ou

dans le cas où les facteurs d'evaluation comprennent la situation de deceleration du véhicule dans le cas de recuperation d'energie,

les informations relatives à la situation de deceleration du véhicule dans le cas de recuperation d'energie comprennent : le fait qu'un rapport logique soit ou non réglé sur une position de rapport de recuperation d'energie, une acceleration du vehicule et une vitesse du vehicule ;

la détermination, pour chacun des facteurs d'evaluation, d'une evaluation instantanee correspondant au facteur d'evaluation sur la base d'une regle d'evaluation instantanee correspondant au facteur d'evaluation et les informations relatives au facteur d'evaluation comprennent :

dans le cas où le rapport logique est réglé sur la position de rapport de recuperation d'energie et où la vitesse du vehicule est superieure a une deuxieme vitesse predeterminee, la determination d'une evaluation instantanee correspondant a la situation de deceleration du vehicule dans le cas de recuperation d'energie sur la base de l'accélération et d'une regle d'evaluation instantanee correspondant a l'accélération ; et

dans le cas où le rapport logique n'est pas réglé sur une position de rapport de recuperation d'energie ou où la vitesse du vehicule n'est pas superieure a une deuxieme vitesse predeterminee, effectuer la determination d'une evaluation instantanee correspondant a la situation de deceleration du vehicule dans le cas de recuperation d'energie, qui est égale à zero ; et/ou

dans le cas où les facteurs d'évaluation comprennent la situation de deceleration du véhicule en cas de recuperation d'energie,

les informations relatives à la situation de deceleration du véhicule en cas d'absence de recuperation d'energie comprennent : le fait que la pédale de frein soit enfoncée ou non, le fait que le rapport logique soit réglé sur une position de rapport sans recuperation d'energie, la vitesse du vehicule et l'acceleration du vehicule ;

la détermination, pour chacun des facteurs d'evaluation, d'une évaluation instantanee correspondant au facteur d'evaluation sur la base d'une regle d'evaluation instantanee correspondant au facteur d'evaluation et les informations relatives au facteur d'evaluation comprennent :

dans le cas où la pédale de frein est enfoncée, où le rapport logique est réglé sur une position de rapport sans recuperation d'energie , et où la vitesse du vehicule est superieure a une troisième vitesse predeterminee, la determination d'une evaluation instantanee correspondant a la situation de deceleration du vehicule en cas d'absence de recuperation d'energie sur la base de l'acceleration du vehicule et d'une regle d'evaluation instantanee correspondant a l'acceleration ; et

dans le cas où la pédale de frein n'est pas enfoncée, ou où le rapport logique n'est pas réglé sur une position de rapport sans recuperation d'energie, ou où la vitesse du vehicule n'est pas superieure a une troisieme vitesse predeterminee, effectuer la determination d'une evaluation instantanee correspondant a la situation de deceleration du vehicule dans le cas d'absence de recuperation d'energie, qui est égale à zero ; et/ou

dans le cas où les facteurs d'evaluation comprennent la situation de vitesse du véhicule,

les informations relatives à la situation de vitesse du véhicule comprennent la vitesse du vehicule ;

la détermination, pour chacun des facteurs d'evaluation, d'une evaluation instantanee correspondant au facteur d'evaluation sur la base d'une regle d'evaluation instantanee correspondant au facteur d'evaluation et d'informations sur le facteur d'evaluation, comprend :

dans le cas où la vitesse du vehicule est superieure a une quatrieme vitesse predeterminee, la determination d'une evaluation instantanee correspondant a la situation de vitesse sur la base de la vitesse du vehicule et d'une regle d'evaluation instantanee correspondant a la vitesse du vehicule ; et

dans le cas où la vitesse du vehicule est inférieure ou égale a une quatrième vitesse, la determination d'une evaluation instantanee correspondant a la situation d'acceleration comme égale à zero; et/ou

dans le cas où les facteurs d'evaluation comprennent la situation de consommation d'accessoire haute tension,

déterminer, pour chacun des facteurs d'evaluation, une evaluation instantanee correspondant au facteur d'evaluation sur la base d'une regle d'evaluation instantanee correspondant au facteur d'evaluation et les informations du facteur d'evaluation comprennent : la determination d'une evaluation instantanee correspondant à la situation de consommation d'accessoire haute tension sur la base d'une puissance d'un climatiseur et d'une regle d'evaluation instantanee correspondant à la puissance du climatiseur.

2. Procédé d'évaluation d'une situation de conduite d'un conducteur selon la revendication 1, comprenant en outre l'
la détermination d'un score total correspondant aux facteurs d'évaluation sur la base du score individuel correspondant à chacun des facteurs d'évaluation et d'une pondération prédéterminée correspondant à chacun des facteurs d'évaluation, dans lequel l'évaluation de la situation de conduite du conducteur comprend le score total.

3. Procédé d'évaluation d'une situation de conduite d'un conducteur selon la revendication 1, comprenant en outre :
informer le conducteur du score individuel correspondant à chacun des facteurs d'evaluation.

4. Procédé d'évaluation d'une situation de conduite d'un conducteur selon l'une quelconque des revendications 1 à 3, dans lequel la détermination, pour chacun des facteurs d'evaluation, d'un score individuel correspondant au facteur d'evaluation sur la base de la détermination d'une évaluation instantanee correspondant au facteur d'evaluation est effectuée à l'aide de l'équation suivante :

$$S_{ai}(n+1) = S_{ai}(n) + \frac{\int S'_{ai}\mathrm{dt}}{t}$$

où $S'_{ai}$ représente une evaluation instantanée correspondant à un facteur d'evaluation i à un instant temporel, t représente la durée d'une periode d'evaluation, n représente le numero de sequence de la periode d'evaluation, $S_{ai}$ (n+1) représente un score individuel correspondant au facteur d'évaluation i dans une (n+1)ème période d'évaluation, et $S_{ai}$ (n) représente un score individuel correspondant au facteur d'évaluation i dans une (n)ème période d'évaluation.

**5.** Dispositif destiné à évaluer une situation de conduite d'un conducteur, comprenant :

un module d'acquisition 1, configuré pour réaliser l'acquisition d'informations sur un ou plusieurs facteurs d'evaluation ; et
un module de traitement 2, configuré pour

pour chacun des facteurs d'evaluation,
déterminer une évaluation instantanée correspondant au facteur d'évaluation sur la base d'une règle d'évaluation instantanée correspondant au facteur d'évaluation et aux informations relatives au facteur d'évaluation, et
déterminer un score individuel correspondant au facteur d'évaluation sur la base de la détermination d'une évaluation instantanee correspondant au facteur d'évaluation, dans lequel le score individuel correspondant au facteur d'évaluation indique une évaluation de la situation de conduite du conducteur
dans lequel
les facteurs d'evaluation comprennent au moins l'un parmi une situation d'acceleration du vehicule, une situation de deceleration du vehicule dans un cas de recuperation d'energie, une situation de deceleration du vehicule dans un cas d'absence de recuperation d'energie, une situation de vitesse du vehicule et une situation de consommation d'accessoire haute tension du vehicule,

dans lequel :

dans le cas où les facteurs d'évaluation comprennent la situation d'acceleration du vehicule,

les informations relatives à la situation d'accélération comprennent : le fait que la pédale d'accelerateur soit enfoncée ou non, le fait qu'un rapport logique soit engagé dans une position de rapport de conduite, l'accélération du vehicule et la vitesse du vehicule ;
la détermination, pour chacun des facteurs d'evaluation, d'une evaluation instantanee correspondant au facteur d'evaluation sur la base d'une regle d'evaluation instantanee correspondant au facteur d'evaluation et les informations relatives au facteur d'evaluation comprennent :

dans le cas où la pédale d'accélérateur est enfoncée, où le rapport logique est réglé sur la position de rapport de conduite et où la vitesse du vehicule est superieure a une premiere vitesse predeterminee, effectuer la determination d'une evaluation instantanee correspondant a la situation d'acceleration sur la base de l'acceleration du vehicule, de la vitesse du vehicule et d'une regle d'evaluation instantanee correspondant a l'acceleration et a la vitesse ; et
dans le cas où la pédale d'accélérateur n'est pas enfoncée, ou où le rapport logique n'est pas réglé sur une position de rapport de conduite, ou où la vitesse du vehicule n'est pas superieure a une premiere vitesse predeterminee, determination d'une evaluation instantanee correspondant a zéro ; et/ou

dans le cas où les facteurs d'evaluation comprennent la situation de deceleration du véhicule dans le cas de recuperation d'energie,

les informations relatives à la situation de deceleration du véhicule dans le cas de recuperation d'energie comprennent : le fait qu'un rapport logique soit ou non réglé sur une position de rapport de recuperation d'energie, une acceleration du vehicule et une vitesse du vehicule ;
la détermination, pour chacun des facteurs d'evaluation, d'une evaluation instantanee correspondant au facteur d'evaluation sur la base d'une regle d'evaluation instantanee correspondant au facteur d'evaluation et les informations relatives au facteur d'evaluation comprennent :

dans le cas où le rapport logique est réglé sur la position de rapport de recuperation d'energie et où la vitesse du vehicule est superieure a une deuxieme vitesse predeterminee, la determination d'une evaluation instantanee correspondant a la situation de deceleration du vehicule dans le cas de recuperation d'energie sur la base de l'acceleration et d'une regle d'evaluation instantanee correspondant a l'acceleration ; et

dans le cas où le rapport logique n'est pas réglé sur une position de rapport de recuperation d'energie ou où la vitesse du vehicule n'est pas superieure a une deuxieme vitesse predeterminee, determination d'une evaluation instantanee correspondant a la situation de deceleration du vehicule dans le cas de recuperation d'energie comme égale à zéro; et/ou

dans le cas où les facteurs d'evaluation comprennent la situation de deceleration du véhicule dans le cas d'absence de recuperation d'energie,

les informations relatives à la situation de décélération du véhicule en cas d'absence de récupération d'énergie comprennent : le fait que la pédale de frein soit enfoncée ou non, le fait que le rapport logique soit réglé sur une position de rapport sans récupération d'énergie, la vitesse du véhicule et l'accélération du véhicule ;

la détermination, pour chacun des facteurs d'evaluation, d'une evaluation instantanee correspondant au facteur d'evaluation sur la base d'une regle d'evaluation instantanee correspondant au facteur d'evaluation et les informations relatives au facteur d'evaluation comprennent :

dans le cas où la pédale de frein est enfoncée, où le rapport logique est réglé sur la position de rapport sans recuperation d'energie et où la vitesse du vehicule est superieure a une troisième vitesse predeterminee, la determination d'une evaluation instantanee correspondant a la situation de deceleration du vehicule en cas d'absence de recuperation d'energie sur la base de l'acceleration du vehicule et d'une regle d'evaluation instantanee correspondant a l'acceleration ; et

dans le cas où la pedale de frein n'est pas enfoncée, ou où le rapport logique n'est pas réglé sur une position de rapport sans recuperation d'energie d , ou où la vitesse du vehicule n'est pas superieure a une troisieme vitesse predeterminee, determination d'une evaluation instantanee correspondant a la situation de deceleration du vehicule dans le cas d'absence de recuperation d'energie, l'evaluation eteant égale à zéro; et/ou

dans le cas où les facteurs d'evaluation comprennent la situation de vitesse du vehicule,

les informations relatives à la situation de vitesse du véhicule comprennent la vitesse du vehicule ;

la détermination, pour chacun des facteurs d'evaluation, d'une évaluation instantanee correspondant au facteur d'evaluation sur la base d'une regle d'evaluation instantanee correspondant au facteur d'evaluation et d'informations sur le facteur d'evaluation, comprend :

dans le cas où la vitesse du vehicule est superieure a une quatrieme vitesse predeterminee, la determination d'une evaluation instantanee correspondant a la situation de vitesse sur la base de la vitesse du vehicule et d'une regle d'evaluation instantanee correspondant a la vitesse du vehicule ; et

dans le cas où la vitesse du vehicule est inférieure ou égale a une quatrième vitesse, la determination d'une evaluation instantanee correspondant a la situation d'acceleration comme égale à zéro; et/ou

dans le cas où les facteurs d'evaluation comprennent la situation de consommation d'accessoire haute tension,

la détermination d'une evaluation instantanee pour chacun des facteurs d'evaluation sur la base d'une regle d'evaluation instantanee correspondant au facteur d'evaluation et d'informations du facteur d'evaluation comprenant : la détermination d'une evaluation instantanee correspondant à la situation de consommation d'accessoire haute tension sur la base d'une puissance d'un climatiseur et d'une regle d'evaluation instantanee correspondant à la puissance du climatiseur.

6. Dispositif pour évaluer une situation de conduite d'un conducteur selon la revendication 5, dans lequel le module de traitement 2 est en outre configuré pour effectuer la détermination d'un score total correspondant aux facteurs d'evaluation sur la base du score individuel correspondant à chacun des facteurs d'evaluation et d'une pondération prédéterminée correspondant à chacun des facteurs d'evaluation, dans lequel l'évaluation de la situation de conduite du conducteur comprend la détermination d'un score total.

7. Dispositif pour évaluer une situation de conduite d'un conducteur selon la revendication 5 ou 6, comprenant en outre : un module d'information, configuré pour informer le conducteur du score individuel correspondant à chacun des facteurs d'evaluation.

8. Support de stockage lisible par machine stockant des instructions, dans lequel les instructions, lorsqu'elles sont exécutées par une machine, amènent la machine à executer le procédé selon l'une quelconque des revendications 1 à 4.

9. Processeur configuré pour exécuter le procédé selon l'une quelconque des revendications 1 à 4 lors de l'exécution d'un programme.

```
┌─────────────────────────────────────────┐
│ Acquire information of one or more        │ ⟋ S10
│ evaluation factors                        │
└─────────────────────────────────────────┘
                    │
                    ▼
┌─────────────────────────────────────────┐
│ Determine an instantaneous score          │ ⟋ S11
│ corresponding to each of the evaluation   │
│ factors                                   │
└─────────────────────────────────────────┘
                    │
                    ▼
┌─────────────────────────────────────────┐
│ Determine a single-score corresponding to │ ⟋ S12
│ each of the evaluation factors            │
└─────────────────────────────────────────┘
```

**Figure 1**

```
        ⟋ 1                    ⟋ 2
┌──────────────────┐   ┌──────────────────┐
│ Acquiring module │───│ Processing module│
└──────────────────┘   └──────────────────┘
```

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2343208 A1